# EUROPÄISCHE PATENTSCHRIFT

(11) **EP 4 166 797 B1**
(45) Veröffentlichungstag und Bekanntmachung des Hinweises auf die Patenterteilung: **26.03.2025**
(21) Anmeldenummer: 22197065.0
(22) Anmeldetag: 22.09.2022
(51) Int. Cl.: F16B 13/14, F16B 25/00

(54) **VERANKERUNGSANORDNUNG UND VERFAHREN ZUM VERANKERN EINES VERANKERUNGSELEMENTS IN EINEM WERKSTOFF**
ANCHORING ARRANGEMENT AND METHOD FOR ANCHORING AN ANCHORING ELEMENT IN A MATERIAL
DISPOSITIF D'ANCRAGE ET PROCÉDÉ D'ANCRAGE D'UN ÉLÉMENT D'ANCRAGE DANS UN MATÉRIAU

(30) Priorität: 15.10.2021 DE 102021211695
(43) Veröffentlichungstag der Anmeldung: 19.04.2023
(73) Patentinhaber: TOGE Dübel GmbH & Co. KG, 90431 Nürnberg (DE)
(72) Erfinder: Gerhard, Andreas, 90427 Nürnberg (DE)
(74) Vertreter: Rau, Schneck & Hübner Patentanwälte Rechtsanwälte PartGmbB

(56) Entgegenhaltungen:
- EP-B1- 2 902 645
- DE-A1- 102011 084 874
- NL-A- 9 101 704

## Beschreibung

Der Inhalt der deutschen Patentanmeldung DE 10 2021 211 695.7 wird erwähnt.

Die Erfindung betrifft eine Verankerungsanordnung sowie ein Verfahren zum Verankern eines Verankerungselements in einem Werkstoff.

Aus DE 10 2011 006 455 A1 ist ein Befestigungsanker bekannt, der in einem Werkstoff verankerbar ist.

EP 2 902 645 B1 offenbart eine Schraube zum Einschrauben in ein Bohrloch und eine Vorspann-Anordnung mit einer derartigen in das Bohrloch eingeschraubten Schraube.

DE 10 2011 084 874 A1 offenbart eine Vorrichtung zur Befestigung eines Gegenstands an einem Untergrund.

NL 9 101 704 A offenbart eine Verankerungseinrichtung.

Der Erfindung liegt die Aufgabe zugrunde, die Festigkeit einer Verankerungsanordnung zu erhöhen.

Diese Aufgabe wird durch eine Verankerungsanordnung mit den im Anspruch 1 angegebenen Merkmalen sowie durch ein Verfahren mit den im Anspruch 6 angegebenen Merkmalen gelöst.

Der Kern der Erfindung besteht darin, dass ein Verankerungselement in einer Stufenbohrung in einem Werkstoff angeordnet und darin verankert ist. Die Stufenbohrung weist einen äußeren und einen inneren Abschnitt auf. Der äußere Abschnitt ist der Oberfläche des Werkstoffs zugewandt und weist einen ersten Durchmesser und eine erste Länge auf. Der innere Abschnitt ist der Oberfläche des Werkstoffs abgewandt und weist einen zweiten Durchmesser und eine zweite Länge auf. Wesentlich ist, dass der zweite Durchmesser des inneren Abschnitts kleiner ist als der erste Durchmesser des äußeren Abschnitts. Der Werkstoff, in dem die Stufenbohrung angeordnet ist, ist insbesondere ein harter, insbesondere ein spröder und insbesondere ein poröser Werkstoff. Der Werkstoff ist insbesondere Beton.

Das Verankerungselement ist insbesondere eine Betonschraube. Das Verankerungselement ist aus einem metallischen Werkstoff, insbesondere aus einem Stahlwerkstoff hergestellt, der insbesondere galvanisch verzinkt und/oder zinklamellenbeschichtet ist. Insbesondere ist das Verankerungselement aus einem Werkstoff mit der Bezeichnung 1.4401, 1.4404, 1.4571, 1.4578 und/oder 1.4529 hergestellt. Es sind auch andere metallische, insbesondere Stahlwerkstoffe, möglich.

Das Verankerungselement weist einen zylindrischen Kern auf, an dem ein Außenschneidgewinde angeordnet ist, das einen Verankerungsabschnitt des Verankerungselements definiert. Der Verankerungsabschnitt ist insbesondere an einem Einführende des Verankerungselements angeordnet. Das Außenschneidgewinde weist insbesondere einen Gewindedurchmesser auf, der größer ist als der zweite Durchmesser des inneren Abschnitts. Das bedeutet, dass beim Eindrehen des Verankerungselements in die Stufenbohrung eine Gewindewendel in die Mantelfläche des inneren Abschnitts eingeschnitten wird. Insbesondere ist der Gewindedurchmesser kleiner als der erste Durchmesser des äußeren Abschnitts. Entlang der Mittellängsachse des Verankerungselements weist das Außenschneidgewinde eine Gewindelänge auf, die kleiner ist als die zweite Länge des inneren Abschnitts. Das Verankerungselement kann derart tief in die Stufenbohrung eingedreht werden, dass die eingeschnittene Gewindewendel, insbesondere mit einem dem äußeren Abschnitt der Stufenbohrung zugewandten Bereich, frei liegt.

Die Verankerungsanordnung umfasst ferner eine aushärtbare Masse, die in der Stufenbohrung angeordnet ist. Die aushärtbare Masse ist in einem Zwischenraum zwischen dem Werkstoff und dem Verankerungselement angeordnet.

Dieser Zwischenraum umfasst insbesondere die zumindest teilweise freiliegende Gewindewendel. Nach dem Aushärten der Masse in der freiliegenden Gewindewendel ergibt sich eine zusätzliche Abstützung und Halterung des Verankerungselements in der Stufenbohrung. Die in der freiliegenden Gewindewendel ausgehärtete Masse wirkt wie eine Verzahnung und verhindert ein unbeabsichtigtes Herausziehen des Verankerungselements aus der Stufenbohrung. Insbesondere wird die aushärtbare Masse vor dem Eindrehen des Verankerungselements in die Stufenbohrung gegeben. Beim Eindrehen des Verankerungselements wird die aushärtbare Masse durch den Druck des Verankerungselements in Unebenheiten und/oder Vertiefungen der Stufenbohrung gepresst, insbesondere auch in mögliche Risse und Mikrorisse, die von der Stufenbohrung aus sich in den Werkstoff erstrecken. Da die aushärtbare Masse im ausgehärteten Zustand eine Druckfestigkeit aufweist als der der Werkstoff, insbesondere Beton, ist die aushärtbare Masse in dem freiliegenden Gewindewendelabschnitt abgestützt.

Als aushärtbare Masse dient eine Verbundmasse, insbesondere eine dünnflüssige Verbundmasse, die beispielsweise eine Viskosität von höchstens 10 mPa/s, insbesondere von höchstens 1 mPa/s und insbesondere von höchstens 0,1 mPa/s aufweist.

Dadurch, dass die Bohrung als Stufenbohrung ausgeführt ist, eignet sich die Verankerungsanordnung insbesondere für große Bohrlochtiefen, da das Verankerungselement ausschließlich in den inneren Abschnitt der Stufenbohrung eingedreht werden muss. Dadurch wird verhindert, dass das Eindrehdrehmoment bei großen Bohrlochtiefen überproportional stark ansteigt. Dadurch kann verhindert werden, dass das Verankerungselement beim Eindrehen in Folge eines überhöhten Eindrehdrehmoments beschädigt oder zerstört wird, also abreißt.

Insbesondere weist die Stufenbohrung den Vorteil auf, dass das Verankerungselement in dem äußeren Abschnitt im Wesentlichen freiliegend angeordnet sein kann und insbesondere kontaktfrei bezüglich der Stufenbohrung angeordnet ist. Das Verankerungselement kann insbesondere vorteilhaft zum Verstärken und insbesondere zum Vorspannen des Werkstoffs dienen. Insbesondere kann eine Druckspannung auf den Werkstoff mittels des Verankerungselements aufgebracht werden, indem das Verankerungselement an der Oberfläche des Werkstoffs beispielsweise mittels einer Scheibe oder Platte abgestützt und die Scheibe oder Platte an der Oberfläche des Werkstoffs beispielsweise mittels eines Befestigungselements, insbesondere mittels einer Befestigungsmutter, angepresst wird. Dadurch, dass das Verankerungselement in dem äußeren Abschnitt der Stufenbohrung freiliegend angeordnet ist, wird die Vorspannung von dem Verankerungselement in den inneren Abschnitt der Stufenbohrung übertragen.

Das Verankerungselement ist insbesondere eine selbstschneidende Schraube, insbesondere eine Betonschraube, die insbesondere aus einem metallischen Werkstoff und insbesondere aus Stahl und insbesondere aus Edelstahl hergestellt ist.

Die zweite Länge beträgt insbesondere das 1,1-Fache der Gewindelänge, insbesondere das 1,2-Fache der Gewindelänge, insbesondere das 1,3-Fache der Gewindelänge, insbesondere das 1,4-Fache der Gewindelänge, insbesondere das 1,5-Fache der Gewindelänge, insbesondere das 1,6-Fache der Gewindelänge, insbesondere das 1,8-Fache der Gewindelänge, insbesondere das 2,0-Fache der Gewindelänge, insbesondere das 2,2-Fache der Gewindelänge, insbesondere das 2,5-Fache der Gewindelänge und insbesondere das 3-Fache der Gewindelänge.

Eine Stufenbohrung mit großer Bohrlochtiefe weist insbesondere ein Verhältnis von Gesamtlänge, also Summe der ersten Länge und der zweiten Länge, zu dem zweiten Durchmesser des inneren Abschnitts von mindestens 10, insbesondere mindestens 15, insbesondere mindestens 20, insbesondere mindestens 50, insbesondere mindestens 70 und insbesondere mindestens 100 auf.

Eine Verankerungsanordnung, bei der der Verankerungsabschnitt einen Kerndurchmesser aufweist, der größer ist als ein Kerndurchmesser eines, insbesondere sich dem Verankerungsabschnitt anschließenden, Schaftabschnitts, ermöglicht eine zusätzlich verbesserte Verankerung. Das Verankerungselement ist mit einem sogenannten Kopfbolzen ausgeführt. Das bedeutet, dass der insbesondere am Einführende des Verankerungselements angeordnete Verankerungsabschnitt einen für das Verankerungselement maximalen Außendurchmesser aufweist. Der Kerndurchmesser des Verankerungsabschnitts ist größer als der Kerndurchmesser eines Schaftabschnitts. Das Verankerungselement ist stufenförmig ausgeführt und insbesondere gegensätzlich zu der Stufenanordnung der Stufenbohrung. Das bedeutet, dass der Verankerungsabschnitt mit dem größeren Kerndurchmesser in der Stufenbohrung innenliegend und der Schaftabschnitt mit dem kleineren Kerndurchmesser außenliegend, also insbesondere im äußeren Abschnitt, angeordnet ist. Insbesondere beträgt der Kerndurchmesser des Verankerungsabschnitts das 1,1-Fache des Kerndurchmessers des Schaftabschnitts, insbesondere das 1,15-Fache des Kerndurchmessers des Schaftabschnitts, insbesondere mindestens das 1,2-Fache des Kerndurchmesser des Schaftabschnitts, insbesondere mindestens das 1,25-Fache des Kerndurchmessers des Schaftabschnitts, insbesondere mindestens das 1,3-Fache des Kerndurchmessers des Schaftabschnitts, insbesondere mindestens das 1,4-Fache des Kerndurchmessers des Schaftabschnitts, insbesondere mindestens das 1,5-Fache des Kerndurchmessers des Schaftabschnitts, insbesondere mindestens das 1,8-Fache des Kerndurchmessers des Schaftabschnitts und insbesondere mindestens das 2,0-Fache des Kerndurchmessers des Schaftabschnitts. Insbesondere schließt sich der Schaftabschnitt unmittelbar an den Verankerungsabschnitt an.

Ein Einfüllen der Masse mit einer Einfüllmenge so, dass die Masse in der Stufenbohrung entlang der Mittellängsachse in einem Bereich zwischen dem Verankerungsabschnitt und einer Oberfläche des Werkstoffs angeordnet ist, gewährleistet eine ausreichende Hinterschnittwirkung, insbesondere indem der, insbesondere als Kopfbolzen ausgeführte, Verankerungsabschnitt von der ausgehärteten Masse hintergriffen wird.

Eine Verankerungsanordnung gemäß Anspruch 2 weist eine zusätzlich erhöhte Festigkeit des Verankerungselements in dem Werkstoff auf. Insbesondere liegt die eingeschnittene Gewindewendel mit mindestens einer Umdrehung bezüglich der Mittellängsachse frei, insbesondere mit 1,5 Umdrehungen, insbesondere mit mindestens 2 Umdrehungen, insbesondere mit mindestens 2,5 Umdrehungen, insbesondere mit mindestens 3 Umdrehungen, insbesondere mit mindestens 3,5 Umdrehungen, insbesondere mit mindestens 4 Umdrehungen, insbesondere mit mindestens 4,5 Umdrehungen und insbesondere mit mindestens 5 Umdrehungen. Die mechanische Rückhaltekraft auf das Verankerungselement ist dadurch erhöht.

Eine Verankerungsanordnung gemäß Anspruch 3 ermöglicht eine erhöhte Festigkeit der Gesamtanordnung. Es wurde gefunden, dass ein Konuswinkel am Übergang vom Verankerungsabschnitt zum Schaftabschnitt eine verbesserte Abstützung an der ausgehärteten Masse im Bohrloch bewirkt. Insbesondere wird das ausgehärtete Material in Folge des Konusabschnitts mit einer zumindest anteiligen Radialkomponente bezogen auf die Längsachse zumindest teilweise anteilig radial nach außen gedrückt. Die ausgehärtete Masse übt eine verbesserte und insbesondere erhöhte Rückhaltekraft auf das Verankerungselement in der Stufenbohrung aus. Dadurch, dass der Konuswinkel kleiner ist als 90°, ist das Risiko minimiert, dass die aushärtbare Masse bei einer Auszugsbeanspruchung des Verankerungselements abschert. Dadurch, dass der Konuswinkel größer ist als 45°, ist die Abstützwirkung verbessert. Die ausgehärtete Masse wird vorteilhaft radial nach außen gegen die Innenwand der Stufenbohrung gedrückt.

Eine Verankerungsanordnung gemäß Anspruch 4 ermöglicht eine unmittelbare Anbringung eines Gegenstands an dem Verankerungselement. Dadurch ist es insbesondere möglich, das Verankerungselement derart in der Stufenordnung anzubringen und darin zu verankern, dass das Verankerungselement mit dem Befestigungsabschnitt zumindest teilweise an der Oberfläche des Werkstoffs aus der Stufenbohrung vorragt. Es ist dadurch möglich, einen Gegenstand an dem Verankerungselement zu befestigen. Insbesondere ist es möglich, den Werkstoff beispielsweise mittels einer Scheibe und einer Befestigungsmutter vorzuspannen, also auf den Werkstoff eine Druckspannung aufzubringen. Es ist dadurch möglich, den Werkstoff nachträglich zu verfestigen und insbesondere Scherspannungen und/oder Zugspannungen im Werkstoff zu kompensieren. Der Befestigungsabschnitt des Verankerungselements weist insbesondere ein Befestigungsgewinde auf, das insbesondere als metrisches Gewinde und insbesondere als metrisches Außengewinde ausgeführt ist.

Eine Verankerungsanordnung gemäß Anspruch 5 vereinfacht das Eindrehen des Verankerungselements in die Stufenbohrung. An einem Drehmomentübertragungsabschnitt kann ein Eindrehdrehmoment unmittelbar aufgebracht werden. Dies kann besonders vorteilhaft mittels eines Werkzeugs erfolgen. Wesentlich ist, dass der Drehmomentübertragungsabschnitt in einer Ebene senkrecht zur Längsachse eine unrunde Kontur, insbesondere eine unrunde Außenkontur, aufweist. Vorteilhaft ist es, wenn diese unrunde Außenkontur einem gängigen Werkzeugprofil entspricht wie beispielsweise eine Außensechskant- oder Außenvierkantkontur. Es ist auch möglich, dass der Drehmomentübertragungsabschnitt eine unrunde Innenkontur aufweist wie beispielsweise eine Innensechskantkontur, eine Innenvierkantkontur oder eine Innensechsrundkontur.

Ein Verfahren gemäß Anspruch 6 weist im Wesentlichen die Vorteile der Verankerungsanordnung auf, worauf hiermit verwiesen wird.

Ein Verfahren gemäß Anspruch 7 gewährleistet, dass die eingeschnittene Gewindewendel mit ausreichender Länge frei liegt, so dass die aushärtbare Masse dort eindringen und nach dem Aushärten eine verbesserte Verankerung bewirken kann.

Sowohl die in den Patentansprüchen angegebenen Merkmale als auch die in dem Ausführungsbeispiel einer erfindungsgemäßen Verankerungsanordnung angegebenen Merkmale sind jeweils für sich alleine oder in Kombination miteinander geeignet, den erfindungsgemäßen Gegenstand im Rahmen des durch die Patentansprüche definierten Schutzumfangs weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine Längsschnittdarstellung einer erfindungsgemäßen Verankerungsanordnung mit einem Verankerungselement in einer Stufenbohrung in einem Werkstoff,
- Fig. 2: eine vergrößerte Detaildarstellung des Details II in Fig. 1.

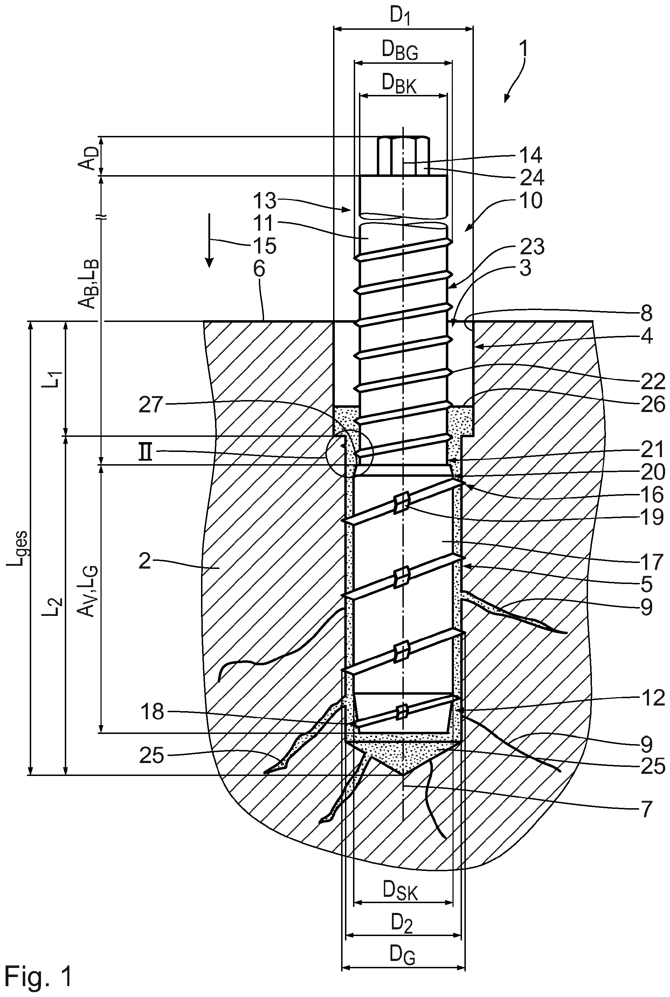

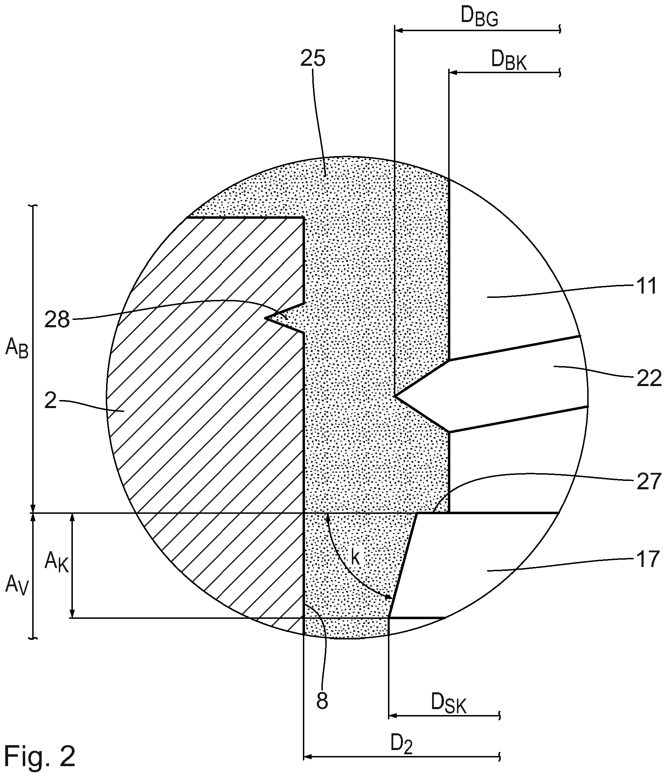

Im Folgenden wird unter Bezugnahme auf die Fig. 1 und 2 eine Verankerungsanordnung 1 beschrieben. Die Verankerungsanordnung 1 umfasst Beton als Werkstoff 2, in dem ein Bohrloch 3 in Form einer Stufenbohrung angeordnet ist. Die Stufenbohrung 3 weist einen äußeren Abschnitt 4 mit einem ersten Durchmesser D₁ und mit einer ersten Länge L₁ sowie einen inneren Abschnitt 5 mit einem zweiten Durchmesser D₂ und einer zweiten Länge L₂ auf. Die erste Länge L₁ und die zweite Länge L₂ summieren sich zu der Gesamtlänge L_{ges}, die die Bohrlochtiefe der Stufenbohrung 3 darstellt.

Der erste Durchmesser D₁ ist größer als der zweite Durchmesser D₂. Der äußere Abschnitt 4 ist an einer Außenseite der Stufenbohrung 3 angeordnet, also einer äußeren Oberfläche 6 des Werkstoffs 2 zugewandt. Die Stufenbohrung 3 erstreckt sich von der Oberfläche 6 aus in den Werkstoff 2 entlang einer Bohrloch-Längsachse 7. Der innere Abschnitt 5 schließt sich dem äußeren Abschnitt 4 entlang der Bohrloch-Längsachse 7 an und ist entsprechend der Oberfläche 6 abgewandt angeordnet. Der äußere Abschnitt 4 und der innere Abschnitt 5 sind bezüglich der Bohrloch-Längsachse 7 konzentrisch zueinander und bezüglich der Bohrloch-Längsachse 7 hintereinander angeordnet.

Die Stufenbohrung 3 weist eine Bohrloch-Innenwand 8 auf. Die Stufenbohrung 3 ist als Sackloch ausgeführt. Dadurch, dass der Werkstoff 2 insbesondere ein sprödes Material sein kann, können in Folge der Bohrloch-Herstellung, also in Folge des Bohrvorgangs, Risse 9 in dem Werkstoff 2 entstehen. Die Risse 9 erstrecken sich ausgehend von der Bohrloch-Innenwand 8 der Stufenbohrung 3 in den Werkstoff 2.

In der Stufenbohrung 3 ist ein Verankerungselement 10 angeordnet. Das Verankerungselement 10 ist ein Befestigungsanker. Das Verankerungselement 10 umfasst einen zylindrischen Kern 11 mit einem Einführende 12, einem dem Einführende 12 gegenüberliegenden Außenende 13, einer Mittellängsachse 14 und einer zur Mittellängsachse 14 parallel gerichteten Einschraubrichtung 15. Das Verankerungselement 10 ist konzentrisch in der Stufenbohrung 3 angeordnet. Das heißt, dass die Bohrloch-Längsachse 7 und die Mittellängsachse 14 zusammenfallen, also aufeinander liegen.

Der Kern 11 weist einen Verankerungsabschnitt A_{V} auf, entlang dessen sich ein Außenschneidgewinde 16 zum Einschrauben des Schneidgewindes 16 in den Werkstoff erstreckt. Das Außenschneidgewinde 16 weist eine entlang der Mittellängsachse 14 orientierte Gewindelänge L_{G} auf, die kleiner ist als die zweite Länge L₂ des inneren Abschnitts 5. Gemäß dem gezeigten Ausführungsbeispiel erstreckt sich die Gewindelänge L_{G} entlang der gesamten Länge des Verankerungsabschnitts A_{V}. Es ist auch möglich, dass die Gewindelänge L_{G} sich lediglich bereichsweise entlang des Verankerungsabschnitts A_{V} erstreckt, insbesondere entlang höchstens 90 % des Verankerungsabschnitts A_{V}, insbesondere entlang höchstens 80 % des Verankerungsabschnitts A_{V}, insbesondere mindestens entlang 50 % des Verankerungsabschnitts A_{V}. In diesem Fall weist der Verankerungsabschnitt A_{V} zumindest bereichsweise einen schneidgewindefreien Abschnitt auf, der dem Außenende 13 zugewandt und/oder dem Außenende 13 abgewandt an dem Verankerungsabschnitt A_{V} angeordnet sein kann.

Das Außenschneidgewinde 16 wird vorzugsweise durch Walzen aus dem im Wesentlichen zylindrischen Kern 11 hergestellt.

Der Verankerungsabschnitt A_{V} wird auch als Schneidkopf 17 oder als Kopfbolzen bezeichnet. Das Außenschneidgewinde 16 hat einen Schneidkerndurchmesser D_{SK}, einen Gewindedurchmesser D_{G} und einen am Einführende 12 angeordneten Gewindeanfang 18.

Insbesondere ist der Gewindedurchmesser D_{G} kleiner als der erste Durchmesser D₁. Der Gewindedurchmesser D_{G} ist größer als der zweite Durchmesser D₂.

An dem Außenschneidgewinde 16 sind mehrere, insbesondere je Gewindegang ein, Schneidelemente 19 angeordnet, um das Eindrehen des Verankerungselements 10 in den Werkstoff 2 zu erleichtern. Als Gewindegang wird ein voller Umlauf der Schraubenlinie des Außenschneidgewindes 16 verstanden. Die Schneidelemente 19 sind entlang einer zur Mittellängsachse 14 parallel orientierten Mantellinie angeordnet. Die Schneidelemente 19 können auch in einer anderen Anzahl, d. h. mehrere Schneidelemente 19 je Gewindegang des Außenschneidgewindes 16, vorgesehen sein. Es ist auch möglich, das Verankerungselement 10 ohne Schneidelemente 19 auszuführen. Als Schneidelement 19 kann Schneidmaterial mit hoher Härte und Festigkeit wie beispielsweise Diamant, TiC, TiN und/oder Hartmetall oder Schnellstahl wie beispielsweise Schnellarbeitsstahl oder Hochleistungs-Schnellstahl (HSS) eingesetzt werden. Gemäß dem gezeigten Ausführungsbeispiel weist das Außenschneidgewinde 16 vier Gewindegänge auf. Es ist vorteilhaft, wenn mindestens drei Gewindegänge des Außenschneidgewindes 16 vorgesehen sind, um eine ausreichende Befestigung des Verankerungselements 10 in der Stufenbohrung 3 zu ermöglichen. Es ist auch möglich, dass das Außenschneidgewinde 16 fünf oder mehr Gewindegänge aufweist. Dem Einführende 12 gegenüberliegend ist an dem Verankerungsabschnitt A_{V} ein Ende 20 vorgesehen.

An das Ende 20 des Verankerungsabschnitts A_{V} schließt sich entlang der Mittellängsachse 14 unmittelbar ein Befestigungsabschnitt A_{B} mit einem Ende 21 an. Das Ende 21 des Befestigungsabschnitts A_{B} ist innerhalb des inneren Abschnitts 5 angeordnet.

Entlang des Befestigungsabschnitts A_{B} erstreckt sich ein einstückig mit dem Kern 11 ausgebildetes Befestigungsgewinde 22 zum Befestigen eines nicht dargestellten Befestigungselements an dem Verankerungselement 10. Durch das Anbringen des Befestigungselements am Befestigungsgewinde 22 ist es möglich, eine Vorspannung auf den Werkstoff 2 aufzubringen und dadurch den Werkstoff 2 vorzuspannen, also zu verstärken. Das Befestigungselement ist außerhalb der Stufenbohrung 3 angeordnet. Gemäß dem gezeigten Ausführungsbeispiel ist das Befestigungsgewinde 16 als metrisches Außengewinde ausgeführt. Es ist auch möglich, dass das Befestigungsgewinde 22 beispielsweise ein Trapezgewinde oder ein Fractionalgewinde ist.

In dem Befestigungsabschnitt A_{B} hat das Befestigungsgewinde 22 einen Befestigungskerndurchmesser D_{BK} und einen Befestigungsgewindedurchmesser D_{BG}. Sowohl der Befestigungskerndurchmesser D_{BK} als auch der Befestigungsgewindedurchmesser D_{BG} sind kleiner als der Schneidkerndurchmesser D_{SK}.

Der Befestigungsgewindedurchmesser D_{BG} ist kleiner als der erste Durchmesser D₁ und kleiner als der zweite Durchmesser D₂. Der Schneidkerndurchmesser D_{SK} ist jeweils gegenüber dem ersten Durchmesser D₁ und insbesondere gegenüber dem zweiten Durchmesser D₂ reduziert, um ein Anliegen des Verankerungselements 10 mit dem Kern 11 an der Bohrloch-Innenwand 8 zu vermeiden. Dadurch wird das für das Eindrehen des Verankerungselements 10 erforderliche Eindrehdrehmoment nicht zusätzlich erhöht.

Der Befestigungsgewindedurchmesser D_{BK} beträgt gemäß dem gezeigten Ausführungsbeispiel etwa 93 % des Schneidkerndurchmessers D_{SK}. Insbesondere beträgt der Befestigungsgewindedurchmesser D_{BG} höchstens 94 % des Schneidkerndurchmessers D_{SK}, insbesondere höchstens 90 % und insbesondere höchstens 83 %. Dadurch ist gewährleistet, dass bei einer Abweichung der Geradheit des Kerns 11 des Verankerungselements 10 ein Anliegen des Verankerungselements 10 mit dem Befestigungsabschnitt A_{B} an der Bohrloch-Innenwand 8 vermieden ist, insbesondere wenn der Befestigungsabschnitt A_{B} zumindest abschnittsweise innerhalb der Stufenbohrung 3 angeordnet ist und insbesondere eine große Länge aufweist.

Die Herstellung des Verankerungselements 10 kann dadurch erfolgen, dass der Kern 11 einstückig ausgeführt und insbesondere durch Walzen hergestellt ist. Es ist alternativ auch möglich, den Schneidkopf 17 separat herzustellen. Entsprechend wird auch ein den Befestigungsabschnitt A_{B} des Kerns 11 bildender Schaft 23 separat hergestellt. Der Schaft 23 und der Schneidkopf 17 werden anschließend fest beispielsweise unlösbar und insbesondere durch Schweißen wie beispielsweise Reibschweißen zu dem Kern 11 miteinander verbunden.

Der Befestigungsabschnitt A_{B} weist eine entlang der Mittellängsachse 14 orientierte Befestigungsabschnittslänge L_{B} auf, die insbesondere länger ist als die Länge des Verankerungsabschnitts A_{V} und insbesondere größer ist als die Gewindelänge L_{G}. Dadurch ist eine sehr variable Eindrehtiefe, die auch als Setztiefe bekannt ist, für das Verankerungselement 10 möglich, da auch bei großen Setztiefen, die beispielsweise ein Vielfaches der Länge des Verankerungsabschnitts A_{V} betragen können, gewährleistet ist, dass das Verankerungselement 10 zumindest abschnittsweise mit dem Befestigungsabschnitt A_{B} aus der Stufenbohrung 3 hervorragt. Gemäß der in Fig. 1 gezeigten Verankerungsanordnung 1 ragt das Verankerungselement 10 mit dem Befestigungsabschnitt A_{B} abschnittsweise an der die Stufenbohrung 3 begrenzenden Oberfläche 6 des Werkstoffs 2 hervor. Dadurch ist gewährleistet, dass die Befestigung des nicht dargestellten BefestigungsElements an dem Verankerungselement 10 auch bei sehr großen Setztiefen noch möglich ist.

Der Befestigungsabschnitt A_{B} bildet einen Schaftabschnitt. Insbesondere ist es möglich, dass der Befestigungsabschnitt A_{B} zumindest abschnittsweise ohne Befestigungsgewinde, also befestigungsgewindefrei, ausgeführt ist. Vorteilhaft ist es, wenn das Befestigungsgewinde 2 zumindest in einem äußeren, dem Verankerungsabschnitt A_{V} gegenüberliegend angeordneten Ende des Befestigungsabschnitts A_{B} ausgeführt ist.

An dem Außenende 13 ist an dem Kern 11 ein Drehmomentübertragungsabschnitt A_{D} angeordnet, der ein Drehmomentübertragungsmittel 24 aufweist. Das Drehmomentübertragungsmittel 24 dient zum Übertragen eines Eindrehdrehmoments von einem Eindrehwerkzeug auf den Kern 11, um das Eindrehen des Verankerungselements 10 in den Werkstoff 2 zu erleichtern. Gemäß dem gezeigten Ausführungsbeispiel ist das Drehmomentübertragungsmittel 24 als Außensechskant ausgeführt.

Gemäß dem gezeigten Ausführungsbeispiel erstreckt sich der Drehmomentübertragungsabschnitt A_{D} entlang der Mittellängsachse 14 an dem Befestigungsabschnitt A_{B}. Die Gesamtlänge des Verankerungselements 10 ergibt sich aus den Längen des Drehmomentübertragungsabschnitts A_{D}, des Befestigungsabschnitts A_{B} und des Verankerungsabschnitts A_{V}. Es ist auch denkbar, dass das Drehmomentübertragungsmittel 24 als Vertiefung an dem Befestigungsabschnitt A_{B} mit einer unrunden Innenkontur ausgeführt ist. In diesem Fall ergibt sich die Gesamtlänge des Verankerungselements 10 aus der Summe der Länge des Verankerungsabschnitts A_{V} und des Befestigungsabschnitts A_{B}.

In der Stufenbohrung 3 ist eine dünnflüssige Verbundmasse 25 angeordnet, die insbesondere in die Stufenbohrung 3 eingegeben wird, bevor das Verankerungselement 10 in die Stufenbohrung 3 eingeschraubt wird. Die Verbundmasse 25 ist eine aushärtbare Masse, die also beim Einfüllen in die Stufenbohrung 3 flüssig ist und nach einer Aushärtdauer ausgehärtet ist.

Die Masse 25 weist insbesondere eine reduzierte Viskosität und insbesondere ein thixotropes Verhalten derart auf, dass sich die Viskosität der Masse 25 aufgrund eines auf die Masse 25 wirkenden Drucks beim Eindrehen des Verankerungselements 10 nicht erhöht, und insbesondere reduziert. Das bedeutet, dass die Masse 25 der mechanischen Verpressung während des Eindrehens des Verankerungselements 10 nicht zähflüssig und insbesondere dünnflüssiger wird. Dadurch ist ermöglicht, dass die Masse 25 in die Risse 9 des Werkstoffs 2 eindringen kann, auch wenn diese Risse 9 sehr fein und insbesondere sehr lang sind und insbesondere Rissöffnungsbreiten aufweisen, die kleiner sind als 1 mm. Es ist dadurch insbesondere nicht erforderlich, die Durchmesser D₁, D₂ der Stufenbohrung 3 in Abhängigkeit der Verwendung der Masse 25 anzupassen. Durch Eindrehen des Verankerungselements 10 in die Stufenbohrung 3 mit der Masse 25 wird diese entgegen der Einschraubrichtung 15 in der Stufenbohrung 3 zumindest anteilig nach oben, also zur Bohrlochöffnung hin, und in die Risse 9 gepresst. Dadurch, dass die Masse 25 in die Risse 9 gepresst wird, wird der Werkstoff im Bereich der Stufenbohrung 3 saniert. Die Befestigung und insbesondere die Festigkeit der Verankerungsanordnung 1 ist dadurch verbessert.

Gemäß dem gezeigten Ausführungsbeispiel ist der Verankerungsabschnitt A_{V} von der Masse 25 eingehüllt. Zudem ist die Masse 25 zumindest abschnittsweise im Bereich des Befestigungsabschnitts A_{B} angeordnet. Es ist insbesondere denkbar, das Volumen der eingefüllten Masse 25 derart zu bemessen, dass ein zwischen dem Verankerungselement 10 und der Stufenbohrung 3 verbleibender Zwischenraum vollständig mit der Masse 25 ausgefüllt ist. Vorteilhaft ist es, wenn mindestens 50 % des Volumens des Zwischenraums zwischen dem Verankerungselement 10 und der Stufenbohrung 3 von der Masse 25 gefüllt sind. Die Masse 25 bildet eine Stirnringfläche 26. Die Stirnringfläche 26 ist insbesondere innerhalb des äußeren Abschnitts 4 angeordnet.

Die ausgehärtete Masse 25 führt zu einem im Wesentlichen kontinuierlichen Durchmesserübergang von dem Befestigungskerndurchmesser D_{BK} zu dem Schneidkerndurchmesser D_{SK} des Verankerungselements 10. Eine möglicherweise auftretende Kerbwirkung bei dem Verankerungselement 10 ist dadurch reduziert. Dadurch, dass das Verankerungselement 10 auch in dem Befestigungsabschnitt A_{B} durch die ausgehärtete Masse 25 in der Stufenbohrung 3 gehalten ist, in dem die ausgehärtete Masse 25 das Verankerungselement 10 zumindest abschnittsweise im Bereich des Befestigungsabschnitts A_{B} mit der Bohrloch-Innenwand 8 verbindet, ist die Festigkeit und Stabilität der Verankerungsanordnung 1 zusätzlich verbessert. Die ausgehärtete Masse 25 dient als zusätzliche Befestigung des Verankerungselements 10 gegen ein Herausziehen aus der Stufenbohrung 3 entgegen der Einschraubrichtung 15. Die ausgehärtete Masse 25 hält das Verankerungselement 10 an dem Durchmesserübergang von dem Schneidkerndurchmesser D_{SK} am Ende 20 des Verankerungsabschnitts A_{V} zu dem Ende 21 des Befestigungsabschnitts A_{B}, der den Befestigungskerndurchmesser D_{BK} aufweist. Der Schneidkerndurchmesser D_{SK} bildet einen Kerndurchmesser des Verankerungsabschnitts A_{V}.

Der Befestigungskerndurchmesser D_{BK} bildet einen Kerndurchmesser des Schaftabschnitts, also des Befestigungsabschnitts A_{B}. Diese zwischen dem Verankerungsabschnitt A_{V} und dem Befestigungsabschnitts A_{B} gebildete Schulter 27 wird gegen ein Herausziehen entgegen der Einschraubrichtung 15 aus der Stufenbohrung 3 durch die Masse 25 gehalten. Die Verankerung des Verankerungselements 10 in der Stufenbohrung 3 ist dadurch zusätzlich erhöht.

Nachfolgend wird diese Verankerung in dem Bereich der Schulter 27 anhand der Detailansicht in Fig. 2 näher erläutert.

Am Übergang des Verankerungsabschnitts A_{V} zu dem Schaftabschnitts, also zu dem Befestigungsabschnitt A_{B}, weist der Verankerungsabschnitt A_{V} einen Konusabschnitt A_{K} auf. In dem Konusabschnitt A_{K} ist der Schneidkopf 17 konisch ausgeführt, also zu dem Befestigungsabschnitt A_{B} konisch verjüngend ausgeführt, so dass der Durchmesser des Verankerungsabschnitts A_{V} im Bereich der Schulter 27 kleiner ist als der Schneidkerndurchmesser D_{SK}. Ein Konuswinkel k des konischen Abschnitts ist kleiner als 90° und größer als 45°. Gemäß dem gezeigten Ausführungsbeispiel ist der Konuswinkel k etwa 75°.

Insbesondere ist Fig. 2 auch zu entnehmen, dass an der Bohrloch-Innenwand 8 des inneren Abschnitts 5 eine freiliegende Gewindewendel 28 angeordnet ist. Die Gewindewendel 28 wurde durch das Eindrehen des Verankerungselements 10 mit dem Außenschneidgewinde 16 in die Bohrlochinnenwand 8 eingeschnitten. Dadurch, dass die Gewindelänge L_{G} kleiner ist als die zweite Länge L₂, ist die Gewindewendel 28 zumindest abschnittsweise freiliegend ausgeführt. Die freiliegende Gewindewendel 28 ist insbesondere dem Befestigungsabschnitt 28 in der Stufenbohrung 3 zugewandt ausgeführt. Beim Eindrehen des Verankerungselements 10 wird entsprechend die aushärtbare Masse 25 auch in die freiliegende Gewindewendel 28 eingepresst. Dadurch ergibt sich eine Verzahnung der später ausgehärteten Masse 25 in der Stufenbohrung 3. Die Festigkeit der Verankerungsanordnung 1 gegen Herausziehen des Verankerungselements 10 aus der Stufenbohrung 3 ist dadurch zusätzlich erhöht.

Nachfolgend wird ein Verfahren zum Verankern des Verankerungselements 10 in der Stufenbohrung 3 des Werkstoffs 2 näher erläutert.

Die Stufenbohrung 3 wird hergestellt, indem zunächst eine erste Bohrung bis auf die gesamte Bohrlochtiefe mit dem zweiten Durchmesser D₂ hergestellt wird. Anschließend wird das Bohrloch mit dem ersten Durchmesser D₁ bis auf eine reduzierte Tiefe, die der ersten Länge L₁ entspricht, aufgebohrt. In die so hergestellte Stufenbohrung 3 wird die aushärtbare Masse 25 in einem flüssigen Zustand eingefüllt.

Anschließend wird das Verankerungselement 10 in die Stufenbohrung 3 mit dem Einführende eingeführt. Da der Gewindedurchmesser D_{G} kleiner ist als der erste Durchmesser D₁, kann das Verankerungselement 10 im Wesentlichen widerstandsfrei bis zu dem inneren Abschnitt 5 eingeführt werden. Wenn das Verankerungselement 10 mit dem Einführende 12 am Übergang vom äußeren Abschnitt 4 zum inneren Abschnitt 5 angelangt ist, wird das Verankerungselement 10 in die Stufenbohrung 3 eingeschraubt, also mit dem Verankerungsabschnitt A_{V} in den inneren Abschnitt 5 eingedreht und an dem inneren Abschnitt 5 verankert, indem das Außenschneidgewinde 16 die Gewindewendel 28 in die Bohrloch-Innenwand 8 des inneren Abschnitts 5 einschneidet. Dabei wird das Verankerungselement 10 bis zu der maximalen Setztiefe eingedreht.

Da die Gewindelänge L_{G} kleiner ist als die zweite Länge L₂ werden die zuerst eingeschnittenen Gewindegänge der Gewindewendel 28, die dem Befestigungsabschnitt A_{B} zugewandt angeordnet sind, wieder freigelegt. In diese freigelegten Abschnitte der Gewindewendel 28 wird die aushärtbare Masse 25 eingedrückt.

Außerdem steigt die aushärtbare Masse 25 entgegen der Einschraubrichtung 15 in der Stufenbohrung 3 nach oben bis in den Befestigungsabschnitt A_{B} und insbesondere bis zur Oberfläche 6. Es wird dadurch eine Hinterschnittkontur der aushärtbaren Masse 25 gebildet, die die Schulter 27 hintergreift. Dadurch, dass in dem Übergangsbereich zwischen dem Verankerungsabschnitt A_{V} und dem Befestigungsabschnitt A_{B} der Konusabschnitt A_{K} vorgesehen ist, wird ein Abscheren der aushärtbaren Masse 25 verhindert. Durch den Konusabschnitt werden bei einer Auszugsbewegung des Verankerungselements 10 zumindest anteilig radial nach außen gerichtete Kräfte auf die ausgehärtete Masse 25 ausgeübt, die ein Anpressen der ausgehärteten Masse 25 in der Stufenbohrung 3, also in Richtung der Bohrloch-Innenwand 8, bewirken. Die Festigkeit ist dadurch zusätzlich erhöht.

## Patentansprüche

1. Verankerungsanordnung mit
a. einem Werkstoff (2), in dem eine Stufenbohrung (3) angeordnet ist, die
i. einen äußeren Abschnitt (4) mit einem ersten Durchmesser (D₁) und mit einer ersten Länge (L₁) und
ii. einen inneren Abschnitt (5) mit einem zweiten Durchmesser (D₂) und mit einer zweiten Länge (L₂) aufweist,
wobei der zweite Durchmesser (D₂) kleiner ist als der erste Durchmesser (D₁),
b. einem Verankerungselement (10) mit einem eine Mittellängsachse (14) aufweisenden zylindrischen Kern (11), der einen ein Außenschneidgewinde (16) aufweisenden Verankerungsabschnitt (A_{V}) umfasst, mit dem das Verankerungselement (10) an dem inneren Abschnitt (5) verankert ist, wobei das Außenschneidgewinde (16) eine entlang der Mittellängsachse (14) orientierte Gewindelänge (L_{G}) aufweist, die kleiner ist als die zweiten Länge (L₂) des inneren Abschnitts (5),
c. einer aushärtbaren Masse (25), die in der Stufenbohrung (3) in einem Zwischenraum zwischen dem Werkstoff (2) und dem Verankerungselement (10) derart angeordnet ist, dass die Masse (25) in der Stufenbohrung (3) entlang der Mittellängsachse (14) in einem Bereich zwischen dem Verankerungsabschnitt (A_{V}) und einer Oberfläche (6) des Werkstoffs (2) angeordnet ist,
**dadurch gekennzeichnet, dass** der Verankerungsabschnitt (A_{V}) einen Kerndurchmesser (D_{SK}) aufweist, der größer ist als ein Kerndurchmesser (D_{BK}) eines Schaftabschnitts (A_{B}).

2. Verankerungsanordnung gemäß Anspruch 1, **dadurch gekennzeichnet, dass** in den inneren Abschnitt (5) eine Gewindewendel (28) eingeschnitten ist, wobei die aushärtbare Masse (25) zumindest teilweise, insbesondere vollständig, in der Gewindewendel (28) angeordnet ist.

3. Verankerungsanordnung gemäß einem der vorstehenden Ansprüche, **dadurch gekennzeichnet, dass** der Verankerungsabschnitt (A_{V}) am Übergang zum Schaftabschnitt (A_{B}) konisch ausgeführt ist, wobei ein Konuswinkel (k) kleiner ist als 90°, insbesondere größer ist als 45°, insbesondere mindestens 50° beträgt, insbesondere mindestens 60°, insbesondere mindestens 75°, insbesondere mindestens 80° und insbesondere mindestens 85°.

4. Verankerungsanordnung gemäß einem der vorstehenden Ansprüche, **dadurch gekennzeichnet, dass** das Verankerungselement (10) einen Befestigungsabschnitt (A_{B}) zum Befestigen eines Gegenstands an dem Verankerungselement (10) aufweist, wobei der Befestigungsabschnitt (A_{B}) insbesondere ein, insbesondere metrisches, Befestigungsgewinde (22) aufweist.

5. Verankerungsanordnung gemäß einem der vorstehenden Ansprüche, **dadurch gekennzeichnet, dass** das Verankerungselement (10) einen Drehmomentübertragungsabschnitt (A_{D}) zum Übertragen eines Eindrehdrehmoments, insbesondere von einem Werkzeug auf das Verankerungselement (10) aufweist.

6. Verfahren zum Verankern eines Verankerungselements in einem Werkstoff umfassend die Verfahrensschritte
- Herstellen einer Stufenbohrung (3) in einem Werkstoff (2), wobei die Stufenbohrung (3)
-- einen äußeren Abschnitt (4) mit einem ersten Durchmesser (D₁) und mit einer ersten Länge (L₁) und
-- einen inneren Abschnitt (5) mit einem zweiten Durchmesser (D₂) und mit einer zweiten Länge (L₂) aufweist,
wobei der zweite Durchmesser (D₂) kleiner ist als der erste Durchmesser (D₁),
- Einfüllen einer aushärtbaren Masse (25) in der Stufenbohrung (3) mit einer Einfüllmenge, so dass die Masse (25) in der Stufenbohrung (3) entlang der Mittellängsachse (14) in einem Bereich zwischen einem Verankerungsabschnitt (A_{V}) eines Verankerungselements (10) und einer Oberfläche (6) des Werkstoffs (2) angeordnet ist,
- Eindrehen des Verankerungselements (10) in die Stufenbohrung (3), wobei das Verankerungselement (10) einen eine Mittellängsachse (14) aufweisenden zylindrischen Kern (11) mit dem ein Außenschneidgewinde (16) aufweisenden Verankerungsabschnitt (AV) umfasst, mit dem das Verankerungselement (10) durch Einschneiden einer Gewindewendel (28) an einer Bohrloch-Innenwand (8) des inneren Abschnitts (5) an dem inneren Abschnitt (5) verankert wird, wobei das Außenschneidgewinde (16) eine entlang der Mittellängsachse (14) orientierte Gewindelänge (L_{G}) aufweist, die kleiner ist als die zweiten Länge (L₂) des inneren Abschnitts (5), wobei der Verankerungsabschnitt (A_{V}) einen Kerndurchmesser (D_{SK}) aufweist, der größer ist als ein Kerndurchmesser (D_{BK}) eines Schaftabschnitts (A_{B}).
- Aushärten der Masse (25), die in der Stufenbohrung (3) in einem Zwischenraum zwischen dem Werkstoff (2) und dem Verankerungselement (10) angeordnet ist.

7. Verfahren gemäß Anspruch 6, **dadurch gekennzeichnet, dass** das Eindrehen soweit erfolgt, dass die mit dem Außenschneidgewinde (16) in den Werkstoff (2) eingeschnittene Gewindewendel (28) zumindest teilweise freiliegt.

## Claims

1. Anchoring arrangement having
a. a material (2), in which a stepped bore (3) is arranged, which has
i. an outer section (4) with a first diameter (D₁) and with a first length (L₁) and
ii. an inner section (5) with a second diameter (D₂) and with a second length (L₂),
wherein the second diameter (D₂) is smaller than the first diameter (D₁),
b. an anchoring element (10) with a cylindrical core (11) having a central longitudinal axis (14) and which comprises an anchoring section (AV) having an outer cutting thread (16), with which the anchoring element (10) is anchored to the inner section (5), wherein the outer cutting thread (16) has a thread length (LG) oriented along the central longitudinal axis (14), which is smaller than the second length (L2) of the inner section (5),
c. a hardenable mass (25), which is arranged in the stepped bore (3) in an intermediate space between the material (2) and the anchoring element (10) in such a way that the mass (25) is arranged in the stepped bore (3) along the central longitudinal axis (14) in a region between the anchoring section (A_{V}) and a surface (6) of the material (2),
**characterised in that**
the anchoring section (A_{V}) has a core diameter (D_{SK}), which is greater than a core diameter (D_{BK}) of a shaft section (A_{B}).

2. Anchoring arrangement according to claim 1, **characterised in that** a threaded helix (28) is cut into the inner section (5), wherein the hardenable mass (25) is arranged at least partially, in particular fully, in the threaded helix (28).

3. Anchoring arrangement according to one of the preceding claims, **characterised in that** the anchoring section (A_{V}) is conical at the transition to the shaft section (A_{B}), wherein a cone angle (k) is smaller than 90°, in particular larger than 45°, in particular at least 50°, in particular at least 60°, in particular at least 75°, in particular at least 80° and in particular at least 85°.

4. Anchoring arrangement according to one of the preceding claims, **characterised in that** the anchoring element (10) has a fastening section (A_{B}) for fastening an object to the anchoring element (10), wherein the fastening section (A_{B}) has in particular a fastening thread (22), in particular a metric one.

5. Anchoring arrangement according to one of the preceding claims, **characterised in that** the anchoring element (10) has a torque transmission section (A_{D}) for transmitting an insertion torque, in particular from a tool to the anchoring element (10).

6. Method for anchoring an anchoring element in a material comprising the method steps of
- producing a stepped bore (3) in a material (2), wherein the stepped bore (3) has
-- an outer section (4) with a first diameter (D₁) and with a first length (L₁) and
-- an inner section (5) with a second diameter (D₂) and with a second length (L₂),
wherein the second diameter (D₂) is smaller than the first diameter (D₁),
- filling a hardenable mass (25) in the stepped bore (3) with a filling quantity such that the mass (25) is arranged in the stepped bore (3) along the central longitudinal axis (14) in a region between the anchoring section (A_{V}) of an anchoring element (10) and a surface (6) of the material (2),
- screwing the anchoring element (10) into the stepped bore (3), wherein the anchoring element (10) comprises a cylindrical core (11) having a central longitudinal axis (14) with the anchoring section (A_{V}) having an outer cutting thread (16), with which the anchoring element (10) is anchored to the inner section (5) by cutting a threaded helix (28) on a borehole inner wall (8) of the inner section (5), wherein the outer cutting thread (16) has a thread length (L_{G}) oriented along the central longitudinal axis (14), which is smaller than the second length (L₂) of the inner section (5), wherein the anchoring section (A_{V}) has a core diameter (D_{SK}) which is greater than a core diameter (D_{BK}) of a shaft section (A_{B}).
- hardening the mass (25) arranged in the stepped bore (3) in an intermediate space between the material (2) and the anchoring element (10).

7. Method according to claim 6, **characterised in that** screwing-in is carried out to such an extent that the threaded helix (28) cut into the material (2) with the outer cutting thread (16) is at least partially exposed.

## Revendications

1. Dispositif d'ancrage comportant
a. un matériau (2), dans lequel est agencé un trou étagé (3), qui présente
i. une partie extérieure (4) dotée d'un premier diamètre (D₁) et d'une première longueur (L₁) et
ii. une partie intérieure (5) dotée d'un second diamètre (D₂) et d'une seconde longueur (L₂),
le second diamètre (D₂) étant inférieur au premier diamètre (D₁),
b. un élément d'ancrage (10) doté d'un noyau (11) cylindrique présentant un axe longitudinal médian (14), ledit noyau comprenant une partie d'ancrage (A_{V}) présentant un filet extérieur taraudeur (16), avec laquelle l'élément d'ancrage (10) est ancré à la partie intérieure (5), le filet extérieur taraudeur (16) présentant une longueur de filet (L_{G}) orientée le long de l'axe longitudinal médian (14) qui est inférieure à la seconde longueur (L₂) de la partie intérieure (5),
c. une masse (25) durcissable, qui est agencée dans le trou étagé (3) dans un espace intermédiaire entre le matériau (2) et l'élément d'ancrage (10) de telle manière que la masse (25) est agencée dans le trou étagé (3) le long de l'axe longitudinal médian (14) dans une zone située entre la partie d'ancrage (A_{V}) et une surface (6) du matériau (2),
**caractérisé en ce que**
la partie d'ancrage (A_{V}) présente un diamètre de noyau (D_{SK}) qui est supérieur à un diamètre de noyau (D_{BK}) d'une partie tige (A_{B}).

2. Dispositif d'ancrage selon la revendication 1, **caractérisé en ce qu'**une hélice de filet (28) est coupée dans la partie intérieure (5), la masse (25) durcissable étant agencée au moins en partie, en particulier entièrement, dans l'hélice de filet (28).

3. Dispositif d'ancrage selon l'une des revendications précédentes, **caractérisé en ce que** la partie d'ancrage (A_{V}) est réalisée conique au niveau de la transition avec la partie tige (A_{B}), l'angle de cône (k) étant inférieur à 90°, en particulier supérieur à 45°, en particulier au moins de 50°, en particulier au moins de 60°, en particulier au moins de 75°, en particulier au moins de 80° et en particulier au moins de 85°.

4. Dispositif d'ancrage selon l'une des revendications précédentes, **caractérisé en ce que** l'élément d'ancrage (10) présente une partie de fixation (A_{B}) pour la fixation d'un objet à l'élément d'ancrage (10), la partie de fixation (A_{B}) présentant en particulier un filet de fixation (22), en particulier métrique.

5. Dispositif d'ancrage selon l'une des revendications précédentes, **caractérisé en ce que** l'élément d'ancrage (10) présente une partie de transmission de couple (A_{D}) pour transmettre un couple de vissage, en particulier d'un outil à l'élément d'ancrage (10).

6. Procédé d'ancrage d'un élément d'ancrage dans un matériau, comprenant les étapes de procédé consistant à
- fabriquer un trou étagé (3) dans un matériau, le trou étagé (3) présentant
-- une partie extérieure (4) dotée d'un premier diamètre (D₁) et d'une première longueur (L₁) et
-- une partie intérieure (5) dotée d'un second diamètre (D₂) et d'une seconde longueur (L₂),
le second diamètre (D₂) étant inférieur au premier diamètre (D₁),
- remplir une masse (25) durcissable dans le trou étagé (3) avec une quantité de remplissage telle que la masse (25) est agencée dans le trou étagé (3) le long de l'axe longitudinal médian (14) dans une zone située entre une partie d'ancrage (A_{V}) d'un élément d'ancrage (10) et une surface (6) du matériau (2),
- visser l'élément d'ancrage (10) dans le trou étagé (3), l'élément d'ancrage (10) comprenant un noyau (11) cylindrique présentant un axe longitudinal médian (14) et comportant la partie d'ancrage (AV) présentant un filet extérieur taraudeur (16), avec laquelle l'élément d'ancrage (10) est ancré à la partie intérieure (5) par la découpe d'une hélice de filet (28) sur une paroi intérieure (8) de trou de perçage de la partie intérieure (5), le filet extérieur taraudeur (16) présentant une longueur de filet (L_{G}) orientée le long de l'axe longitudinal médian (14) qui est inférieure à la seconde longueur (L₂) de la partie intérieure (5), la partie d'ancrage (A_{V}) présentant un diamètre de noyau (D_{SK}) qui est supérieur à un diamètre de noyau (D_{BK}) d'une partie tige (A_{B}).
- durcir la masse (25), qui est agencée dans le trou étagé (3) dans un espace intermédiaire entre le matériau (2) et l'élément d'ancrage (10).

7. Procédé selon la revendication 6, **caractérisé en ce que** le vissage est effectué dans une mesure telle que l'hélice de filet (28) coupée dans le matériau (2) avec le filet extérieur taraudeur (16) est au moins en partie exposée.
